# EUROPEAN PATENT APPLICATION

(11) **EP 2 613 242 A2**
(43) Date of publication of application: **10.07.2013**
(21) Application number: 13150160.3
(22) Date of filing: 03.01.2013
(51) Int. Cl.: G06F 3/0485, G06F 3/0488, G06F 3/01, G09G 5/00

(54) **Input apparatus, display apparatus and methods for controlling a display through user manipulation**

(30) Priority: 06.01.2012 KR 20120001867; 09.01.2012 KR 20120002424; 17.05.2012 KR 20120052402
(71) Applicant: Samsung Electronics Co., Ltd, Gyeonggi-do 443-742 (KR)
(72) Inventor: Lee, Dong-heon, Seoul (KR); Kwon, Yong-hwan, Gyeonggi-do (KR)
(74) Representative: Brandon, Paul Laurence

(57) **Abstract**

An input apparatus of a display apparatus is provided. The input apparatus includes a touch sensor which senses a touch by a user; a motion sensor which senses a motion of the input apparatus; a communication unit which communicates with the display apparatus; and a controller which transmits a first control signal which corresponds to a motion sensed by the motion sensor, through the communication unit, to scroll an image displayed in the display apparatus in response to the motion sensor sensing the motion, and transmits a second control signal which corresponds to a touch sensed by the touch sensor, through the communication unit, to move an object within the scrolled image in response to the touch sensor sensing the touch.

## Description

### BACKGROUND

### Field

Apparatuses and methods consistent with the exemplary embodiments relate to a display apparatus which processes an image signal and displays an image based on the processed image signal, an input apparatus and methods for controlling a display., More particularly, the exemplary embodiments relate to a display apparatus, an input apparatus and methods of controlling the same in which a type of display of an image displayed by the display apparatus is controlled by a user's manipulation of an input apparatus.

### Description of the Related Art

A display apparatus processes an image signal or image data which are supplied by an external image supply source or stored in the display apparatus, and displays an image on a display unit based on the processed image signal/image data. For example, a display apparatus which is provided to general users may include a TV or a monitor. A display apparatus which is implemented as a TV provides an image of a desired broadcasting channel by performing various processes such as tuning and decoding processes, with respect to a broadcasting signal which has been transmitted from the outside.

The display apparatus includes an input apparatus so that a user may set various functions at his/her discretion, including an image processing method. Such input apparatus may be installed at an external side of the display apparatus or provided as a separate apparatus, and the latter may include a remote controller.

The input apparatus may include various types of input unit depending on how it is to be manipulated by a user. For example, an input unit may include a plurality of keys/buttons which are configured to be pressed or toggled by a user. If a user manipulates such keys or buttons, the input apparatus generates and transmits to the display apparatus a control signal which corresponds to the button which has been manipulated. The display apparatus then performs a preset control operation which corresponds to the control signal transmitted by the input apparatus.

### SUMMARY

The foregoing and/or other aspects may be achieved by providing an input apparatus of a display apparatus including a touch sensor which senses a touch; a motion sensor which senses a motion of the input apparatus; a communication unit which communicates with the display apparatus; and a controller which transmits a first control signal which corresponds to a motion sensed by the motion sensor, through the communication unit, to scroll an image displayed in the display apparatus if the motion sensor senses the motion, and transmits a second control signal which corresponds to a touch sensed by the touch sensor, through the communication unit, to move an object within the scrolled image if the touch sensor senses the touch.

The image may include a plurality of selectable items, and the object may include one of a highlight indicator with respect to one of the plurality of items and a cursor indicating one of the plurality of items.

The motion sensor may sense a motion of the input apparatus on a preset three coordinate system.

The controller may generate the first control signal when the touch sensor is touched.

The controller may generate the second control signal which corresponds to a drag on the touch sensor.

The controller may transmit to the display apparatus sensing information through the communication unit in order to rotate a channel number list for selecting a channel if at least one of the touch sensed by the touch sensor and the motion sensed by the motion sensor occurs if an image of the channel number list is displayed in a circular shape in the display apparatus, and the rotation performed by the sensed motion information may rotate the channel number list more than the rotation performed by the sensed touch information.

The sensed information may include a rotation angle of the input apparatus.

The sensed information may further include a rotation direction of the input apparatus or a drag direction resulting from the touch.

The controller may generate and transmit a command through the communication unit in order to suspend a rotation of the channel number list if the motion sensor senses that the rotation angle of the input apparatus returns to an initial value.

Another aspect of the present inventive concept may be achieved by providing a display apparatus including a display unit; an image processor which processes a predetermined image in order to display the image on the display unit; a communication unit which communicates with an input apparatus which includes a touch sensor which senses a touch and a motion sensor which senses a motion; and a controller which scrolls the image which corresponds to motion information of the input apparatus by the motion sensor transmitted to the communication unit, and moves an object within the scrolled image which corresponds to touch information by the touch sensor transmitted to the communication unit.

The image may include a plurality of selectable items, and the object may include one of a highlight indicator with respect to one of the plurality of items and a cursor which indicates one of the plurality of items.

The motion information may include motion information of the input apparatus in a preset three coordinate system.

The touch information of the touch sensor may correspond to a drag on the touch sensor.

The controller may rotate a channel number list for selecting a channel, which corresponds to transmitted information regarding at least one of a sensing of the touch by the touch sensor and a sensing of the motion by the motion sensor in response to such information being transmitted by the input apparatus while an image of the channel number list is displayed in a circular shape on the display unit, and the rotation by the sensed motion information may rotate the channel number list more than a rotation by the sensed touch information.

The transmitted information may include a rotation angle of the input apparatus.

The transmitted information may further include a rotation direction of the input apparatus or a drag direction resulting from the touch of a user.

The controller may suspend the rotation of the channel number list in response to the motion sensor sensing that the rotation angle of the input apparatus has returned to an initial value.

Another aspect of the present inventive concept may be achieved by providing a method of controlling an input apparatus of a display apparatus including sensing a motion of the input apparatus; transmitting a first control signal which corresponds to the motion of the input apparatus to the display apparatus to scroll an image displayed in the display apparatus; and transmitting to the display apparatus a second control signal which corresponds to a touch of a touch sensor of the input apparatus to move an object within the scrolled image in response to the touch sensor of the input apparatus being touched.

The image may include a plurality of selectable items, and the object may include one of a highlight indicator with respect to one of the plurality of items and a cursor which indicates one of the plurality of items.

The method of controlling the input apparatus may further including sensing at least one of a touch of the touch sensor and a motion of the input apparatus in response to an image of a channel number list for selecting a channel being displayed in a circular shape in the display apparatus; transmitting to the display apparatus information of a touch of the touch sensor or a motion of the input apparatus to rotate the channel number list by the information of at least one of the touch and the motion; wherein the rotation by the sensed motion information rotates the channel number list more than the rotation by the sensed touch information.

Another aspect of the present inventive concept may be achieved by providing a method of controlling a display apparatus including displaying a predetermined image; scrolling the image corresponding to motion information of the input apparatus transmitted by an input apparatus which includes a touch sensor to sense a touch and a motion sensor to sense a motion; and moving an object within the scrolled image which corresponds to the touch information of the touch sensor transmitted by the input apparatus.

The image may include a plurality of selectable items, and the object may include one of a highlight indicator with respect to one of the plurality of items and a cursor indicating one of the plurality of items.

The method of controlling a display may further include displaying an image of a channel number list for selecting a channel; rotating the channel number list which corresponds to information regarding at least one of a touch sensed by the touch sensor and a motion sensed by the motion sensor which is transmitted by the input apparatus, wherein the rotation by the sensed motion information rotates the channel number list more than the rotation by the sensed touch information.
Another aspect of the exemplary embodiments may include an input apparatus of a display apparatus including a touch sensor; a motion sensor; a communicator which communicates with the display apparatus; and a controller which transmits first and second control signals which correspond to a motion sensed by the motion sensor and to a touch sensed by the touch sensor, in order to move an object within a scrolled image.

### BRIEF DESCRIPTION OF THE DRAWINGS

The above and/or other aspects of the inventive concept will become apparent and more readily appreciated from the following description of the exemplary embodiments, taken in conjunction with the accompanying drawings, in which:

FIG. 1 illustrates an example of a display system according to a first exemplary embodiment of the present inventive concept;

FIG. 2 is a block diagram of the display system in FIG. 1;

FIG. 3 illustrates an example of a user interface (UI) image displayed in a display apparatus of the display system in FIG. 1;

FIG. 4 illustrates an example of the UI image in FIG. 3 which is scrolled down;

FIG. 5 is a flowchart of a process of controlling an image displaying operation of the display apparatus which corresponds to a manipulation method of an input apparatus of the display system in FIG. 1;

FIG. 6 illustrates an example of adjusting a size of an image based on an effective display area of a display unit of a display apparatus according to a second exemplary embodiment of the present inventive concept;

FIG. 7 illustrates an example of panning the image in FIG. 6 based on the effective display area;

FIG. 8 is a flowchart of a process of controlling an image displaying operation of the display apparatus which corresponds to a manipulation method of an input apparatus according to the second exemplary embodiment of the present inventive concept;

FIG. 9 illustrates an example of a UI image displayed by a display apparatus according to a third exemplary embodiment of the present inventive concept;

FIGS. 10 and 11 illustrate an example of rotating the UI image in FIG. 9 clockwise or counterclockwise;

FIG. 12 illustrates an operation of the UI image in FIG. 9 if a user performs a touch input to the input apparatus; and

FIGS. 13 and 14 are flowcharts of a method of controlling a display system according to the third exemplary embodiment of the present inventive concept.

### DETAILED DESCRIPTION OF EXEMPLARY EMBODIMENTS

Below, exemplary embodiments will be described in detail with reference to accompanying drawings so as to be easily understood by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

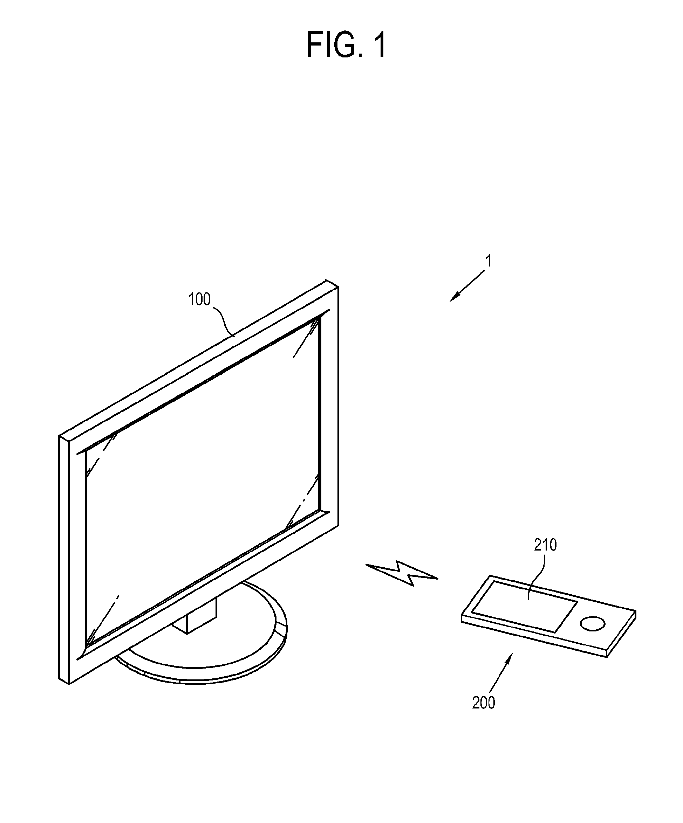

FIG. 1 illustrates an example of a display system 1 according to a first exemplary embodiment of the present inventive concept.

As shown therein, the display system 1 according to the present exemplary embodiment includes a display apparatus 100 which processes an image signal according to a preset image processing operation and displays an image based on the processed image signal, and an input apparatus 200 which generates and transmits to the display apparatus 100 preset commands/data/information/signals to control various operations of the display apparatus 100, at a remote distance.

According to the present exemplary embodiment, the display apparatus 100 is implemented as a TV which displays an image on its own based on image signals/image data/image information supplied by an external image supply source (not shown) or stored in the display apparatus 100. The input apparatus 200 is implemented as a remote controller.

However, the spirit of the present invention may also apply to a different display apparatus 100, e.g., to the case where the display apparatus 100 is a monitor connected to a computer main body (not shown), and the input apparatus 200 is a system which communicates with the computer main body. That is, the exemplary embodiment which will be described hereinafter is one of embodiments according to a realization method of the system, but does not limit the spirit of the present inventive concept.

The type of an image which is displayable by the display apparatus 100 may include a video, still image, applications, on screen display (OSD), and a graphic user interface (GUI) to control various operations, but is not limited thereto.

The input apparatus 200 may perform wireless communication with the display apparatus 100, and as an external apparatus manipulated by a user, the input apparatus 200 may be gripped by a user. The input apparatus 200 transmits to the display apparatus 100 preset commands/control signals/information which correspond to manipulation by a user.

The input apparatus 200 may include various types of input units which are manipulated by a user to generate commands. According to the present exemplary embodiment, the input apparatus 200 includes a touch sensor 210 which is touched by a user. To briefly explain the present exemplary embodiment, only the touch sensor 210 is explained, and it does not mean that the input apparatus 200 includes only the touch sensor 210 as an input unit which receives input from a user.

The input apparatus 200 generates various preset commands which corresponds to a user's manipulation of the touch sensor 210, e.g., touch, drag, and tap, and transmits the generated command to the display apparatus 100. The display apparatus 100 performs a control operation which corresponds to a command transmitted by the input apparatus 200.

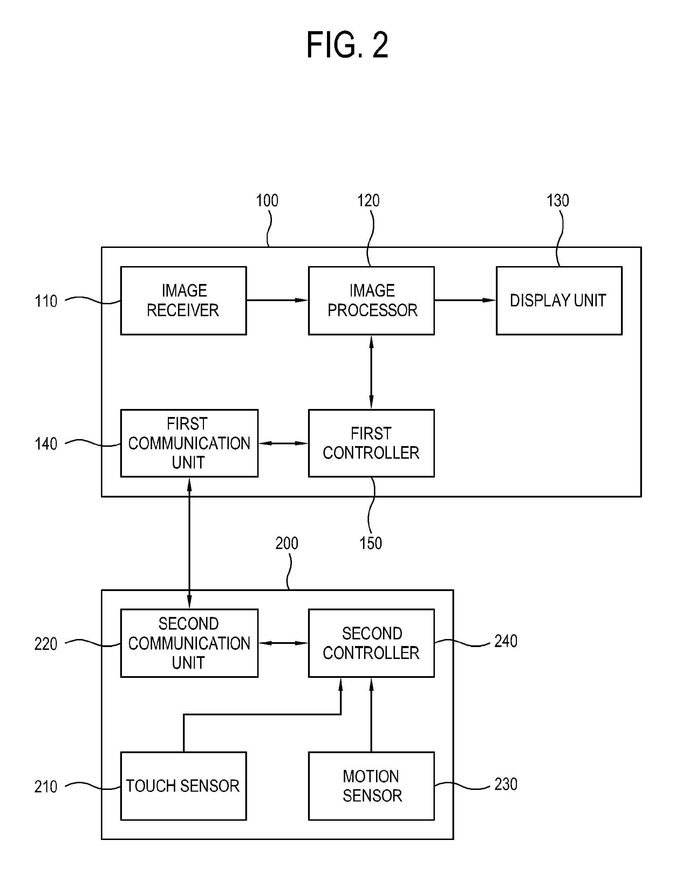

Hereinafter, a detailed configuration of the display apparatus 100 and the input apparatus 200 will be described with reference to FIG. 2. FIG. 2 is a block diagram of the display apparatus 100 and the input apparatus 200.

As shown therein, the display apparatus 100 includes an image receiver 110 which receives an image signal, an image processor 120 which processes an image signal received by the image receiver 110, a display unit 130 which displays an image thereon based on an image signal processed by the image processor 120, a first communication unit 140 which communicates with the input apparatus 200, and a first controller 150 which controls overall operations of the display apparatus 100.

The input apparatus 200 includes a touch sensor 210 which senses a user's touch, a second communication unit 220 which communicates with the first communication unit 140 of the display apparatus 100, a motion sensor 230 which senses a motion of the input apparatus 200, and a second controller 240 which controls overall operations of the input apparatus 200.

Hereinafter, a configuration of display apparatus 100 will be described in detail.

The image receiver 110 receives an image signal from an image supply source (not shown) in a wired/wireless manner, and transmits the image signal to the image processor 120. The signal varies depending on a standard of a received image signal and an embodiment type of the display apparatus 100. For example, the image receiver 110 may receive a digital image signal according to high definition multimedia interface (HDMI) standard or may receive an image data packet stream from a streaming server (not shown).

The image processor 120 processes an image signal, which is transmitted by the image receiver 110, according to preset various image processing operations. The image processor 120 outputs the processed image signal to the display unit 130 to thereby display an image on the display unit 130 based on the processed image signal.

The image processing operation of the image processor 120 may include a decoding operation which corresponds to an image format of an image signal, a de-interlacing operation which converts an interlace image signal into a progressive image signal, a scaling operation which adjusts an image signal into a preset resolution, a noise reduction operation which improves an image quality, a detail enhancement operation, a frame refresh rate conversion operation, etc., but is not limited thereto.

The image processor 120 includes a system-on-chip integrating various functions or an image processing board (not shown) which is formed by a printed circuited board (PCB) (not shown) in which individual elements which respectively perform processes are mounted.

The display unit 130 displays an image thereon which corresponds to an image signal which is output by the image processor 120. The display unit 130 may be implemented as various display panels including liquid crystal, plasma, light-emitting diode (LED), organic light-emitting diode (OLED), surface-conduction electron-emitter, carbon nano-tube, and nano-crystal, but is not limited thereto.

The display unit 130 may further include additional elements according to its embodiment type. For example, if the display unit 130 includes liquid crystal, the display unit 130 includes an LCD panel (not shown), a backlight unit (not shown) emitting light to the LCD panel, and a panel driving substrate (not shown) which drives the panel.

The first communication unit 140 transmits commands/data/information/signals, which are transmitted by the input apparatus 200, to the first controller 150. The first communication unit 140 according to the present exemplary embodiment only receives a signal from the input apparatus 200, but it may otherwise transmit the commands/data/information/signals from the first controller 150 to the input apparatus 200. In this case, the first communication unit 140 complies with radio frequency (RF), Zigbee, Bluetooth, and other wireless communication standards to perform interactive communication between the display apparatus 100 and the input apparatus 200.

The first controller 150 controls an operation of the display apparatus 100 which corresponds to a command received by the first communication unit 140. For example, if a preset command is transmitted from the input apparatus 200 through the first communication unit 140, the first controller 150 controls the image processor 120 to perform an image processing operation hich corresponds to the command. According to the present exemplary embodiment, the controller 150 and the image processor 120 are separate elements, but they may otherwise be implemented as a single image processing board (not shown).

Hereinafter, a configuration of the input apparatus 200 will be described in detail.

The touch sensor 210 is installed in an external side of the input apparatus 200 to be touched by a user. The touch sensor 210 according to the present exemplary embodiment is realized as a touch pad and transmits information to the second controller 240 which corresponds to a user's touch or tapping in a predetermined location of a flat panel and a user's drag in a predetermined direction and location following the touch. The corresponding information includes coordinates of the touched location which correspond to the touch or moving direction and motion amount information which corresponds to the drag.

The touch sensor 210 may employ various configurations to sense the touched location of a flat panel, such as a resistive type sensing pressure or a capacitive type sensing variation of electric charge.

The second communication unit 220 transmits a control signal or a command from the second controller 240 to the first communication unit 140. To do the foregoing, the second communication unit 220 is provided in compliance with a communication protocol which corresponds to the first communication unit 140. The second communication unit 220 may perform an interactive communication with the first communication unit 140 as well as unilateral transmission to the first communication unit 140.

The motion sensor 230 senses a motion of the input apparatus 200 gripped by a user, e.g., inclination or motion of the input apparatus 200 based on a current position of the input apparatus 200. The motion sensor 230 senses a motion of the input apparatus 200 in a preset three coordinate system, i.e., horizontal and vertical axes and height, or axes X, Y and Z. To do the foregoing, the motion sensor 230 may be realized as a gyro sensor, an inertial sensor, or an acceleration sensor.

Upon occurrence of a user's manipulation through the touch sensor 210 or reception of motion information of the input apparatus 200 from the motion sensor 230, the second controller 240 generates a preset control signal which corresponds to such occurrence or reception. The second controller 240 transmits the generated control signal to the second communication unit 220 so that the display apparatus 100 performs a control operation which corresponds to the control signal.

With the foregoing configuration, the display apparatus 100 may display various types of images. For example, the first controller 150 may display a UI image including a plurality of items on the display unit 130. Hereinafter, the exemplary embodiment of the present inventive concept will be explained with respect to the case of displaying a UI image, but the type or nature of the image displayed on the display unit 130 does not limit the spirit of the present inventive concept.

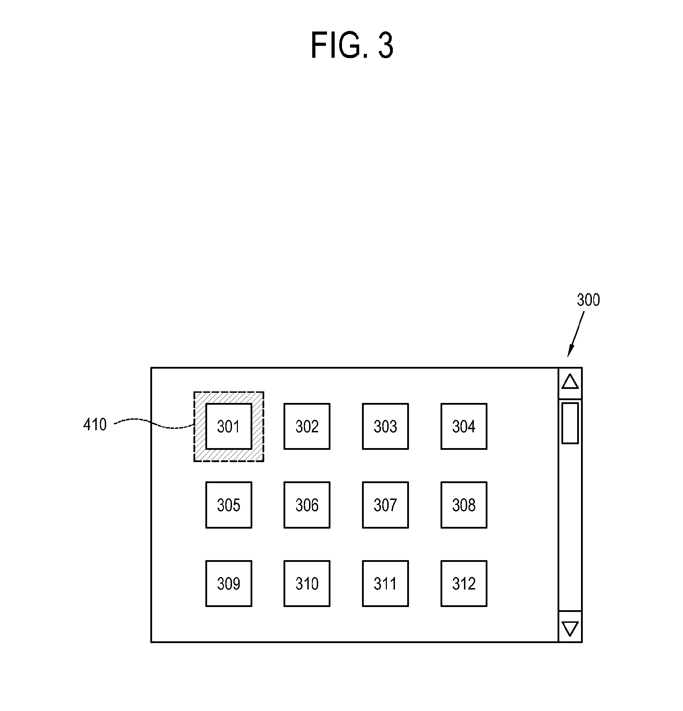

FIG. 3 illustrates an example of a UI image 300 displayed on the display unit 130.

As shown therein, the UI image 300 includes a plurality of selectable items 301 to 312. If the UI image 300 is larger than an effective display area of the display unit 130, the first controller 150 displays a part of the UI image 300 on the display unit 130. The UI image 300 displayed in the drawing indicates the foregoing part of the UI image 300.

The UI image 300 further includes a preset object 410 for selecting an item 301 from the plurality of items 301 to 312. The object 410 may include any element which distinguishes the selected item 301 from unselected items 302 to 312, and may be implemented as a highlight indicator, cursor, pointer, etc. with respect to the item 301.

To display the non-displayed, remaining area of the UI image 300 on the display unit 130, the first controller 150 scrolls and moves the UI image 300. Such scroll is performed when a command for performing the scroll is transmitted by the input apparatus 200 to the display apparatus 100.

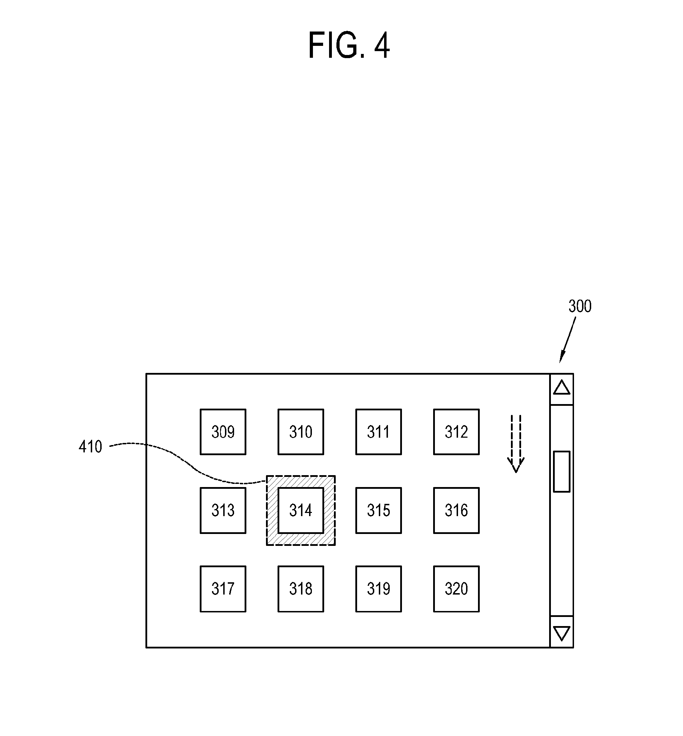

FIG. 4 illustrates an example of scrolling down the UI image in FIG. 3.

As shown therein, as the UI image 300 is scrolled down, the non-displayed, remaining area of the UI image in FIG. 3 is displayed. Then, the plurality of non-displayed items 313 to 320 in FIG. 3 are displayed.

In the UI image 300 which is scrolled down, upon receiving a command from the input apparatus 200 to control the highlight indicator 410, the first controller 150 moves the highlight indicator 410 to a predetermined item 314 which corresponds to the command.

The first controller 150 may scroll the UI image 300 and move the preset object 410 within the scrolled UI image 300, e.g., the highlight indicator 410, according to a command/control signal from the input apparatus 200.

According to the present exemplary embodiment, a control signal which is transmitted by the input apparatus 200 to the display apparatus 100 is generated and transmitted according to the following configuration.

While a user grips the input apparatus 200, the input apparatus 200 performs the following operation. The motion sensor 230 senses a motion of the input apparatus 200. The second controller 240 generates and transmits to the second communication unit 220 a preset first control signal which corresponds to the motion of the input apparatus 200 sensed by the motion sensor 230. Upon manipulation of the touch sensor 210 by the user, , the second controller 240 generates and transmits to the second communication unit 220 a preset second control signal which corresponds to such manipulation.

The first control signal includes motion information of the input apparatus 200, e.g., an inclination direction or angle of the input apparatus 200, or moving direction or motion amount of the input apparatus 200 from an initial location.

The second control signal includes information which relates to a user's touch or tapping of the touch sensor 210, location coordinates on the touch sensor 210 which is touched or tapped, moving direction and the amount of motion resulting from the drag operation.

The display apparatus 100 performs the following operation. Upon reception of the first control signal through the first communication unit 140, the first controller 150 scrolls the UI image 300 which corresponds to the first control signal. The first controller 150 moves the object 410 within the scrolled UI image 300 upon reception of the second control signal.

Thus, through the input apparatus 200, a user may easily change the display method of the UI image 300.

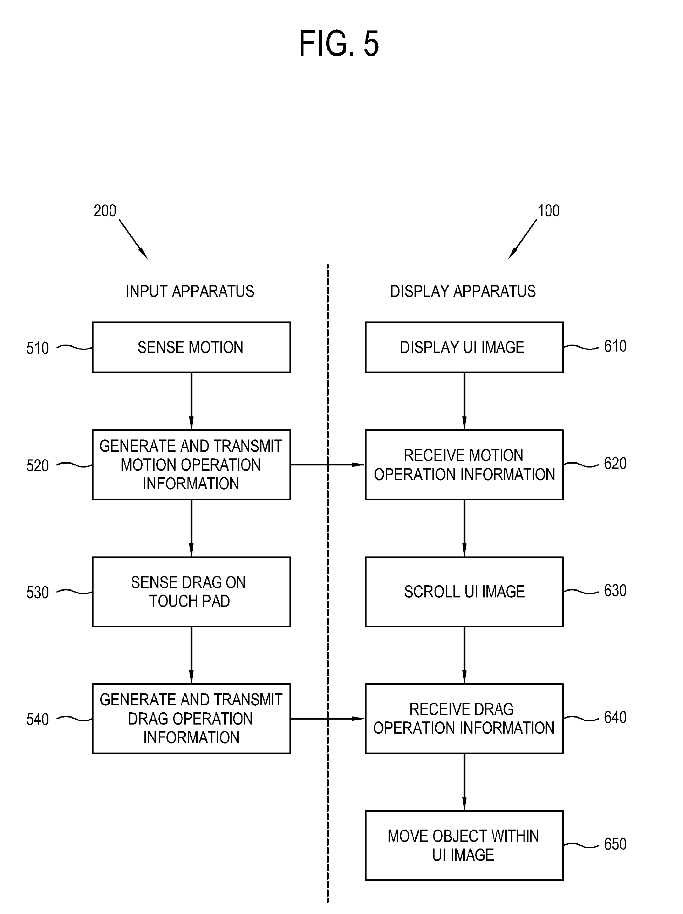

A method of controlling an image displaying operation of the display apparatus 100 which corresponds to the user's manipulation of the input apparatus 200 will be described in detail with reference to FIG. 5. FIG. 5 is a flowchart of a process of controlling the image displaying operation of the display apparatus 100 which corresponds to a method of manipulation of the input apparatus 200.

As shown therein, the input apparatus 200 senses a motion through the motion sensor 230 (510). The input apparatus 200 senses a motion under certain conditions, e.g., when the touch sensor 210 is touched, to thereby prevent a malfunction of the input apparatus 200 or the display apparatus 100.

The display apparatus 100 displays a preset UI image 300 (610).

The input apparatus 200 generates and transmits to the display apparatus 100 motion information which corresponds to the sensed motion (520). For example, if the input apparatus 200 is inclined at a predetermined first angle toward the display apparatus 100, it generates and transmits such motion information.

The display apparatus 100 receives the motion information from the input apparatus 200 (620). The display apparatus 100 scrolls the UI image which corresponds to the received motion information (630). The relationship between the motion information and the scroll of the U I image is stored in advance in the display apparatus 100.

For example, if the motion information relates to the inclination of the input apparatus 200 at a first angle, the display apparatus 100 scrolls down the UI image which corresponds to the forward direction in which the input apparatus 200 is inclined, but scrolls the UI image only as much as the motion amount which corresponds to the first angle at which the input apparatus 200 is inclined. This is an example, and the relationship between the motion information and the scroll of the UI image may vary.

If it is sensed that a user has dragged the touch sensor 210 as a touch pad (530), the input apparatus 200 generates and transmits to the display apparatus 100 drag operation information which corresponds to such drag operation (540). For example, if a user drags the touch sensor 210 from an initial touch location to the right as much as the first motion amount, the input apparatus 200 generates and transmits such drag operation information.

Upon reception of the drag operation information from the input apparatus 200 (640), the display apparatus 100 moves the preset object 410 within the scrolled UI image which corresponds to the drag operation information (650). Like the relationship between the motion information and the scroll of the UI image, the relationship between the drag operation information and the movement of the object 410 is stored in advance in the display apparatus 100.

For example, the display apparatus 100 may move a cursor within the UI image as much as a preset motion amount which corresponds to the drag amount in the same direction as the drag direction.

In the first exemplary embodiment, the scroll of the image or the motion of the object within the image is selectively controlled depending on the input method of the input apparatus 200, but the spirit of the present inventive concept is not limited thereto. Another image displaying method which is different from that in the first exemplary embodiment will be explained below.

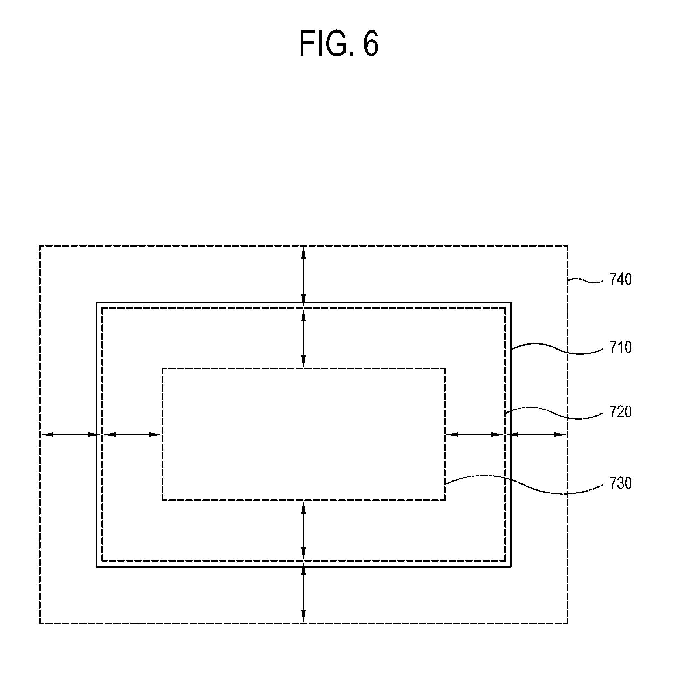

FIG. 6 illustrates an example of adjusting a size of images 720, 730 and 740 based on an effective display area 710 of the display unit 130 in a display apparatus 100 according to a second exemplary embodiment of the present inventive concept.

As shown therein, the first controller 150 displays the image 720 in the effective display area 710 of the display unit 130. The effective display area 710 means an image displaying area of the display unit 130.

The first controller 150 may adjust a size of the image 720 according to a predetermined event, and this is referred to as a zoom in/zoom out. By the zoom in, the first controller 150 reduces the size of the image 720 to generate a smaller image 730. By the zoom out, the first controller 150 enlarges the size of the image 720 to generate a larger image 740.

The enlarged image 740 is larger than the effective display area 710 and thus an entire area of the image 740 is not displayed. That is, only the area within the effective display area 710 of the image 740 is displayed and the remaining area is not displayed.

If the non-displayed area is to be displayed without reducing the size of the image 740, the first controller 150 pans the image 740 based on the effective display area 710.

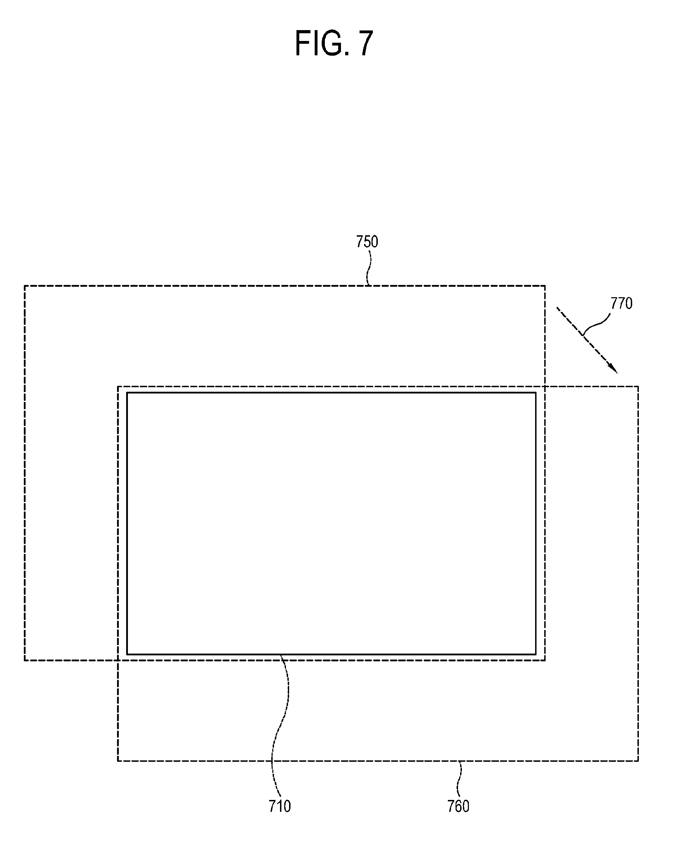

FIG. 7 illustrates an example of panning the images 750 and 760 based on the effective display area 710.

As shown therein, the image 750 is larger than the effective display area 710, and thus only a part of the effective display area 710 is currently displayed.

If the image 750 which is larger than the effective display area 710 is panned in a predetermined direction, the first controller 150 moves the image 750 in the concerned direction based on the effective display area 710 (770). The moved image 760 has a changed area within the effective display area 710 compared to the image 750, and the first controller 150 moves a relative location of the images 750 and 760 with respect to the effective display area 710 to thereby display the non-display area of the image 750. Such a control operation for the images 750 and 760 are referred to as a panning operation.

The first controller 150 adjusts the size of the image and pans the image according to a command/control signal from the input apparatus 200. According to the present exemplary embodiment, the input apparatus 200 generates and transmits a control signal to the display apparatus 100 according to the following configuration.

While a user grips the input apparatus 200, the motion sensor 230 senses a motion of the input apparatus 200. The second controller 240 generates and transmits a preset third control signal through the second communication unit 220 which corresponds to the motion of the input apparatus 200 sensed by the motion sensor 230, and upon manipulation by the user through the touch sensor 210, apparatus 200 generates and transmits a preset fourth control signal through the second communication unit 220 which corresponds to such manipulation.

The third and fourth control signals may employ the first and second control signals provided in the first exemplary embodiment, and thus detailed explanation will be avoided.

The display apparatus 100 performs the following operation. The first controller 150 adjusts the size of an image if the first communication unit 140 receives the third control signal. The first controller 150 pans the adjusted image upon reception of the fourth control signal.

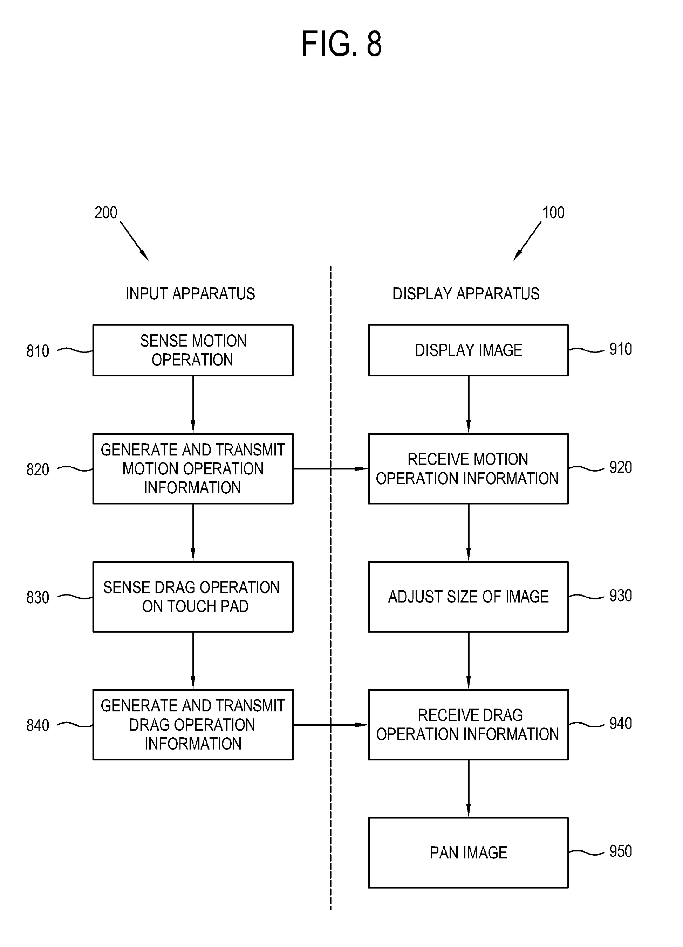

A method of controlling the image displaying operation of the display apparatus 100 which corresponds to the manipulation method of the input apparatus 200 by a user will be described in more detail with reference to FIG. 8. FIG. 8 is a flowchart of a control operation which displays an image by the display apparatus 100 which corresponds to the method of manipulation of the input apparatus 200.

As shown therein, the input apparatus 200 senses a motion of its own by the motion sensor 230 (810). The input apparatus 200 senses the motion under certain conditions, e.g., when the touch sensor 210 is touched, to thereby prevent a malfunction of the input apparatus 200 or the display apparatus 100.

The display apparatus 100 displays a predetermined image (910).

The input apparatus 200 generates and transmits to the display apparatus 100 motion information which corresponds to the sensed motion (820). For example, if the input apparatus 200 is inclined at a predetermined second angle toward the display apparatus 100, it generates and transmits the motion information.

The display apparatus 100 receives the motion information from the input apparatus 200 (920). The display apparatus 100 adjusts the size of the image which corresponds to the received motion information (930). The relationship between the motion information and the adjustment of the image is stored in the display apparatus 100 in advance.

For example, if the motion information relates to the inclination of the input apparatus 200 at the second angle, the display apparatus 100 zooms out the image which corresponds to the forward direction in which the input apparatus 200 is inclined to make the image larger, and applies the enlargement ratio of the image as much as the preset value which corresponds to the second angle at which the input apparatus 200 is inclined. This is an example, and the relationship between the motion information and the adjustment of the image may vary.

If it is sensed that a user has dragged the touch sensor 210 as a touch pad (830), the input apparatus 200 generates and transmits to the display apparatus 100 drag operation information which corresponds to the drag operation (840). For example, if a user drags the touch sensor 210 from an initial touch location to the left as much as the second motion amount, the input apparatus 200 generates and transmits the drag operation information.

Upon reception of the drag operation information from the input apparatus 200 (940), the display apparatus 100 pans the adjusted image which corresponds to the drag operation information (950). The relationship between the drag operation information and the panning operation is stored in advance in the display apparatus 100.

For example, the display apparatus 100 pans the image by moving the image as much as the preset motion amount which corresponds to the drag amount in the same direction as the drag direction.

Upon reception of the drag operation information when the reduced image is displayed in whole on the display unit 130 (940), the display apparatus 100 may not pan the image, or may move the image in the effective display area of the display unit 130 which corresponds to the drag operation information.

In the foregoing exemplary embodiment, the size of the image is adjusted according to the motion information of the input apparatus 200, and the image is panned according to the drag of the touch sensor 210. However, depending on design, the adjustment and panning may be performed by the drag and the motion information, respectively, which are contrary to the above case. That is, the image may be adjusted by dragging the touch sensor 210, and the image may be panned according to the motion information of the input apparatus 200.

As described above, the input apparatus 200 transmits the first control signal which corresponds to the motion of the input apparatus 200 to the display apparatus 100 in order to perform the first manipulation to the image displayed in the display apparatus 100 if the motion sensor 230 senses the motion of the input apparatus 200, and transmits to the display apparatus 100 the second control signal which corresponds to the touch sensed through the touch sensor 210 to perform the second manipulation to the image, to which the first manipulation has been performed, if a user touch is sensed by the touch sensor 210.

The display apparatus 100 performs the first manipulation to the displayed image which corresponds to the first control signal including the motion information of the input apparatus 200 sensed by the motion sensor 230 and transmitted by the input apparatus 200, and performs the second manipulation to the image, to which the first manipulation has been performed, which corresponds to the second control signal including the touch information sensed by the touch sensor 210 and transmitted by the input apparatus 200.

The exemplary embodiment of the first and second manipulations is the same as that in the foregoing exemplary embodiments.

Hereinafter, an exemplary embodiment of displaying an image by the display apparatus 100 through the input apparatus 200 which is different from the foregoing exemplary embodiments will be described.

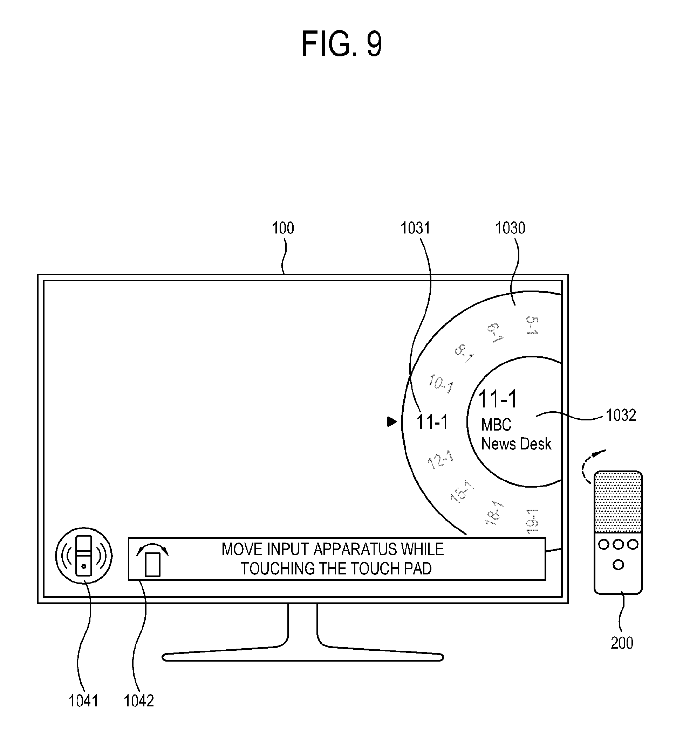

FIG. 9 illustrates an example of a UI image displayed by a display apparatus 100 according to a third exemplary embodiment of the present inventive concept.

As shown therein, upon receiving a user's input which relates to a channel number from the input apparatus 200, the display apparatus 100 displays an image of a channel number list 1030 in a circular shape including selectable channel numbers as a UI. The display apparatus 100 displays UIs 1041 and 1042 which indicate an input mode of the input apparatus 200 based on a command from the input apparatus 200. The displayed UIs 1041 and 1042 may include current input mode information of the input apparatus 200, input mode change information, a guide on the usage of the input apparatus 200 in a predetermined input mode, etc.

The input mode of the input apparatus 200 includes a normal mode which is operated by a user's manipulation of an input unit (not shown) such as a key or a button, a touch mode which is operated by a user's touch input to the touch sensor 210, and a gesture mode which is operated by the motion of the input apparatus 200.

The channel number list 1030 further displays content information 1032 provided by the selected channel 1031 for the convenience of a user in selecting a channel.

The display apparatus 100 rotates the channel number list 1030 which corresponds to a rotation of the input apparatus 200. For example, if the motion sensor 230 senses a clockwise rotation of the input apparatus 200 while the channel number list is displayed in a circular shape, the input apparatus 200 transmits acceleration and angular velocity information according to the sensed rotation, to the display apparatus 100. The input apparatus 200 may be set to sense a rotation thereof by a user while he/she touches the touch sensor 210, as an effective motion for searching a channel.

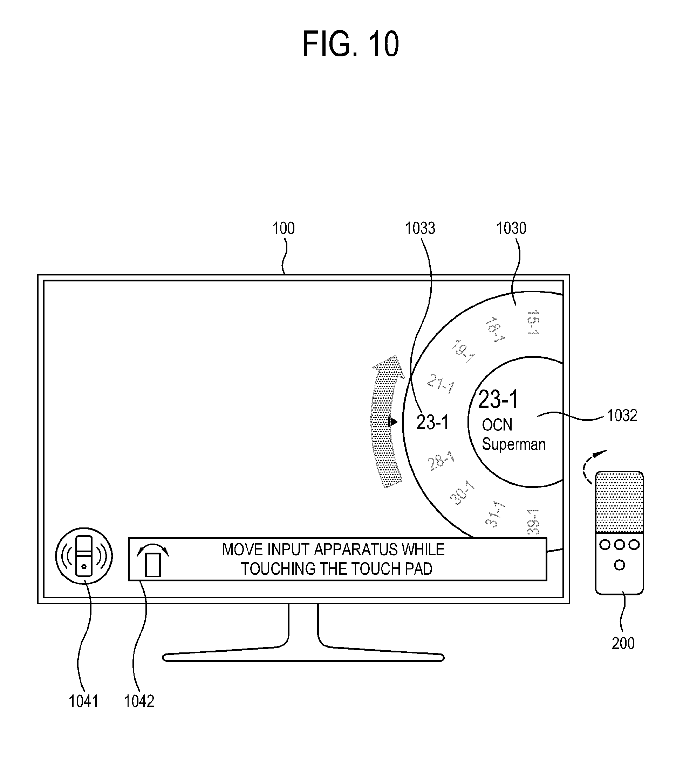

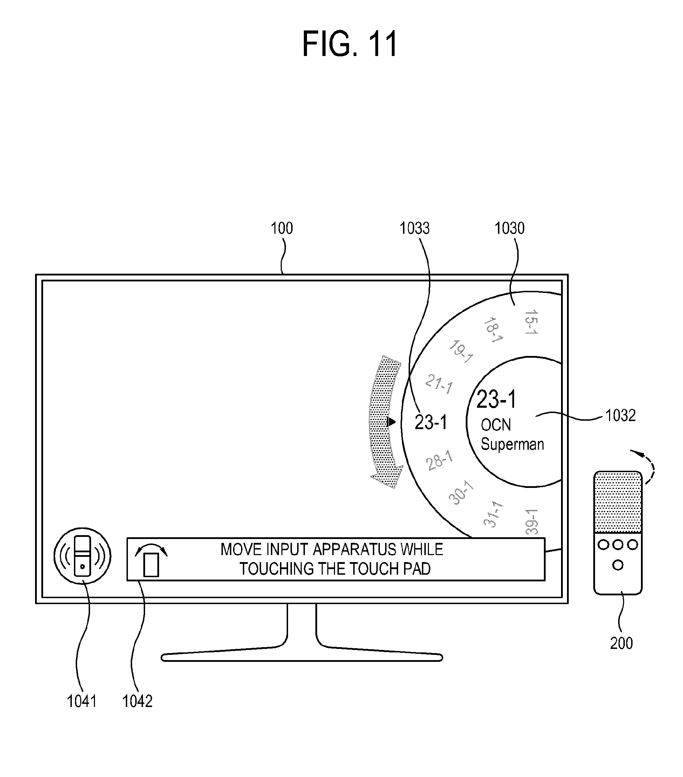

FIGS. 10 and 11 illustrate an example of a clockwise or counterclockwise rotation of the channel number list image 1030 in FIG. 9.

As shown in FIG. 10, the display apparatus 100 rotates the channel number list 1030 clockwise which corresponds to the acceleration and angular velocity information transmitted by the input apparatus 200.

The display apparatus 100 adjusts a rotation direction of the channel number list 1030 according to the rotation direction of the input apparatus 200 based on the transmitted acceleration and angular velocity information. That is, as shown in FIG. 11, if a user rotates the input apparatus 200 counterclockwise, the display apparatus 100 rotates the channel number list 1030 counterclockwise.

The display apparatus 100 adjusts the rotation speed of the channel number list 1030 according to the rotation angle of the input apparatus 200 based on the transmitted acceleration and angular velocity information. That is, if the rotation angle of the input apparatus 200 increases, the rotation speed of the channel number list 1030 increases accordingly. For example, if the rotation angle of the input apparatus 200 is 30°, the channel number list 1030 rotates at a faster speed compared to the case where the rotation angle of the input apparatus 200 is 10°.

The display apparatus 100 suspends the rotation of the channel number list 1030 if the rotation angle of the input apparatus 200 returns to an initial rotation angle.

For example, if a user rotates the input apparatus 200 from zero degree as the initial rotation angle to 30°, the display apparatus 100 rotates the channel number list 1030 at a speed corresponding to 30° as the rotation angle of the input apparatus 200. If a user turns the rotation angle of the input apparatus 200 back to the initial rotation angle, the input apparatus 200 senses such return through the motion sensor 230 and transmits a corresponding command to the display apparatus 100. The display apparatus 100 suspends the rotation of the channel number list 1030 according to the received command.

A user may select a predetermined channel 1033 through his/her input for selecting the channel 1033 from the suspended channel number list 130. A user's input for selecting a channel may include one of a preset motion of the input apparatus 200 sensed by the motion sensor 230, a touch input to the touch sensor 210, and a selection of a particular button of various input units (not shown) of the input apparatus 200.

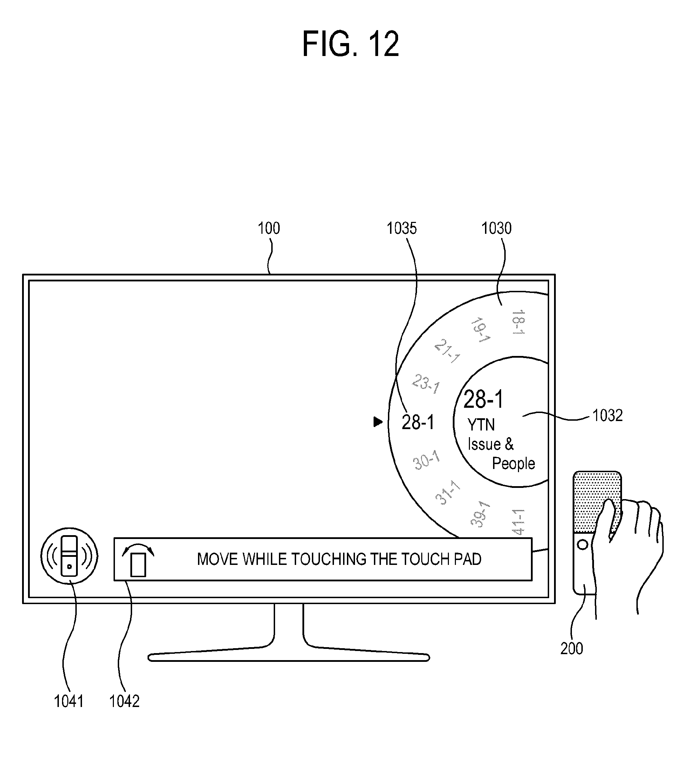

FIG. 12 illustrates an example of an operation of a UI image if a user performs a touch input to the input apparatus 200.

As shown therein, the display apparatus 100 may rotate the channel number list 1030 according to the user's touch input to the touch sensor 210. More specifically, if a drag on the touch sensor 210 in a predetermined direction and at a predetermined distance is sensed while the rotation of the channel number list 1030 is suspended, the input apparatus 200 transmits a corresponding command to the display apparatus 100.

The display apparatus 100 rotates the channel number list 1030 according to the received command. The rotation speed and direction of the channel number list 1030 corresponds to a drag distance, speed and direction to the touch sensor 210.

In controlling the operation of the channel number list 1030, a larger operation corresponds to the gesture mode of the input apparatus 200 and a smaller operation corresponds to the touch mode of the input apparatus 200. Thus, the rotation speed of the channel number list 1030 by the drag in the touch mode of the input apparatus 200 is slower than the rotation speed of the channel number list 1030 by the motion of the input apparatus 200 in the gesture mode of the input apparatus 200.

The rotation by the motion of the input apparatus 200 rotates the channel number list 1030 more than the rotation by the touch input. Thus, while the channel number list 1030 is rotated more by the motion of the input apparatus 200 in the gesture mode (rotation from a channel number 11-1 to 23-1 in FIGS. 9 and 10), a user may select a particular channel (e.g. 28-1) by less rotation of the channel number list 1030 by the touch input in the touch mode (rotation from a channel number 23-1 to 28-1 in FIGS. 6 and 7). The user's input for selecting the channel may include one of a predetermined motion to the input apparatus 200 sensed by the motion sensor 230, a touch input to the touch sensor 210, and a selection of a particular button of various input units (not shown) of the input apparatus 200.

The display apparatus 100 receives an image signal which corresponds to the selected channel, processes the received image signal and displays an image.

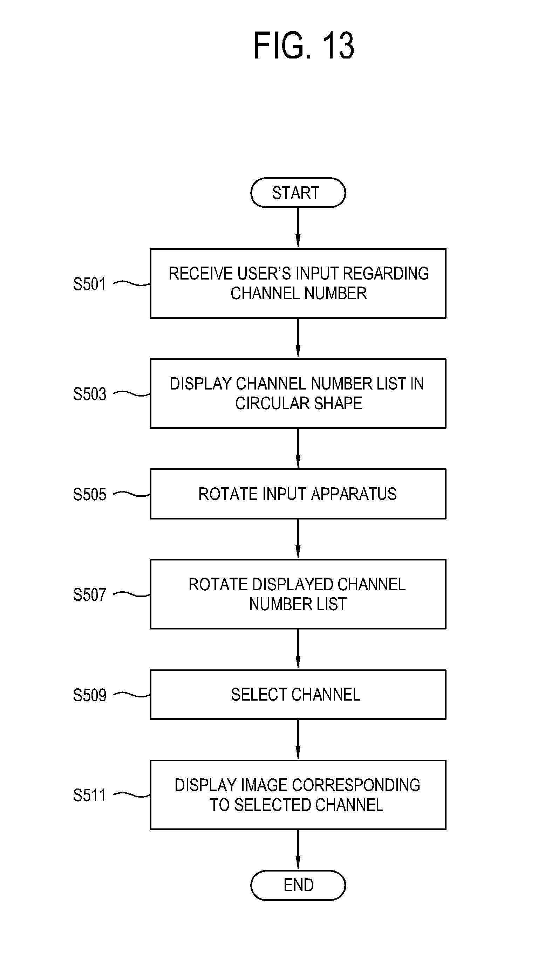

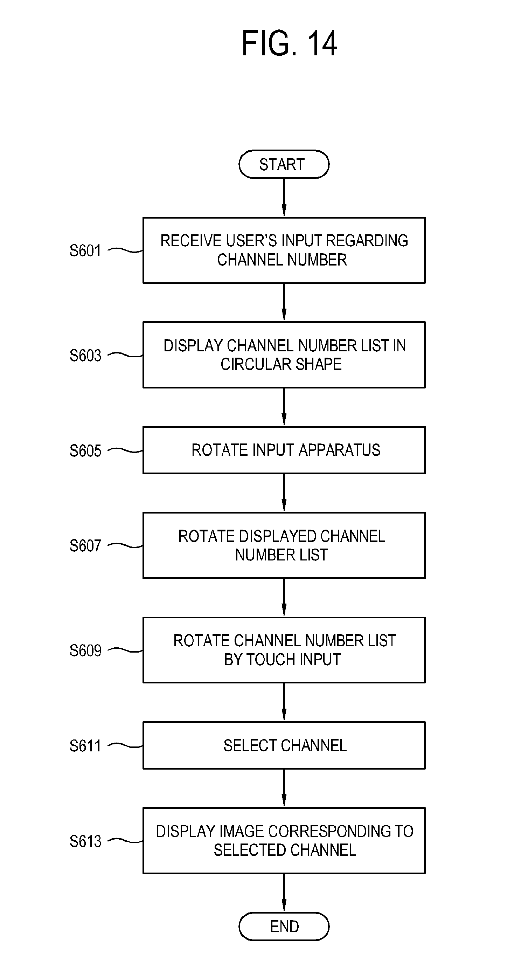

Hereinafter, a method of controlling the display system according to the present exemplary embodiment will be described with reference to FIGS. 13 and 14. FIGS. 13 and 14 are flowcharts of a method of controlling the display system according to the present exemplary embodiment.

As shown in FIG. 13, the input apparatus 200 receives a user' input which relates to a channel number through one of the touch sensor 210, the motion sensor 230 and the input unit (not shown) (S501).

The input apparatus 200 transmits the command which corresponds to the user's input received at operation S501, to the display apparatus 100, and the display apparatus 100 displays the selectable channel number list 1030 in a circular shape (S503).

A user rotates the input apparatus 200 in a predetermined direction while the input apparatus 200 operates in the gesture mode, and the input apparatus 200 transmits to the display apparatus 100 the acceleration and angular velocity information sensed by the rotation(S505).

The display apparatus 100 rotates the channel number list 1030 displayed in a circular shape, which corresponds to the acceleration and angular velocity information transmitted at operation S505 (S507). The rotation direction and rotation speed of the channel number list 1030 is adjusted according to the rotation direction and rotation angle of the input apparatus 200. If the rotation angle of the input apparatus 200 returns to the initial rotation angle, the rotation of the channel number list 1030 is suspended.

While the rotation of the channel number list 1030 is suspended, the input apparatus 200 receives the user's input for selecting the predetermined channel, and transmits a corresponding command to the display apparatus 100 (S509).

The display apparatus 100 receives and processes the image signal which corresponds to the channel selected at operation S509, and displays an image which corresponds to the processed image signal (S511).

The exemplary embodiment in FIG. 14 is different from the exemplary embodiment in FIG. 13 since, in the former case, the channel number list 1030 rotates by the user's touch input in the touch mode as well as in the gesture mode.

As shown in FIG. 14, the input apparatus 200 receives a user's input regarding a channel number through one of the touch sensor 210, the motion sensor 230 and the input unit (not shown) (S601).

The input apparatus 200 transmits to the display apparatus 100 the command corresponding to the user's input transmitted at operation S601, and the display apparatus 100 displays the selectable channel number list 1030 in a circular shape (S603).

A user rotates the input apparatus 200 in a predetermined direction while the input apparatus 200 operates in the gesture mode, and the input apparatus 200 transmits to the display apparatus 100 the acceleration and angular velocity information sensed by the rotation(S605).

Corresponding to the acceleration and angular velocity information at operation S605, the display apparatus 100 rotates the channel number list 1030 displayed in a circular shape (S607). The rotation direction and rotation speed of the channel number list 1030 is adjusted according to the rotation direction and rotation angle of the input apparatus 200 sensed at operation S605. If the rotation angle of the input apparatus 200 returns to the initial rotation angle, the rotation of the channel number list 1030 is suspended.

If a user performs a touch input to the touch sensor 210 (e.g. drag in a predetermined direction) while the rotation of the channel number list 1030 is suspended, the input apparatus 200 transmits a command which corresponds to the touch input, to the display apparatus 100. The display apparatus 100 rotates the channel number list 1030 which corresponds to the received touch input (S609). A user may specifically rotate the channel number list 1030 by the touch input at operation S609, and suspend the rotation of the channel number list 1030 for selecting a channel.

If a user's input is performed to select a predetermined channel while the rotation of the channel number list 1030 is suspended, the input apparatus 200 transmits a corresponding command to the display apparatus 100 (S611).

The display apparatus 100 receives and processes an image signal which corresponds to the channel selected at operation S611, and displays an image which corresponds to the processed image signal (S613).

According to the exemplary embodiment of the present inventive concept, the channel number list 1030 is displayed in a rotatable shape as used in an analog TV and enables a user to manipulate it intuitively and provides a user with a feeling of ease of use and familiarity. As the channel number list 1030 is rotated at a fast speed by a simple motion of rotating the input apparatus 200, a user's convenience in manipulation improves. As the rotation direction and rotation angle of the input apparatus 200 are reflected in the rotation direction and rotation speed of the channel number list 1030, even a user who is not familiar with a motion input does not feel that it is difficult to use, and can have fun manipulating the input apparatus.

Although a few exemplary embodiments have been shown and described, it will be appreciated by those skilled in the art that changes may be made in these exemplary embodiments without departing from the principles and spirit of the invention, the range of which is defined in the appended claims and their equivalents.

## Claims

1. An input apparatus of a display apparatus comprising:
a touch sensor which senses a touch;
a motion sensor which senses a motion of the input apparatus;
a communication unit which communicates with the display apparatus; and
a controller which transmits a first control signal corresponding to a motion sensed by the motion sensor, through the communication unit, to scroll an image displayed in the display apparatus in response to the motion sensor sensing the motion, and transmits a second control signal corresponding to a touch sensed by the touch sensor, through the communication unit, to move an object within the scrolled image in response to the touch sensor sensing the touch.

2. The input apparatus according to claim 1, wherein the image comprises a plurality of selectable items, and the object comprises one of a highlight indicator with respect to one of the plurality of items and a cursor indicating one of the plurality of items.

3. The input apparatus according to claim 1, wherein the controller generates the first control signal when the touch sensor is touched.

4. The input apparatus according to claim 1, wherein the controller generates the second control signal corresponding to a drag on the touch sensor.

5. The input apparatus according to claim 1, wherein the controller transmits to the display apparatus sensing information through the communication unit to rotate a channel number list for selecting a channel in response to at least one of the touch sensed by the touch sensor and the motion sensed by the motion sensor occurs in response to an image of the channel number list being displayed in a circular shape in the display apparatus, and the rotation performed by the sensed motion information rotates the channel number list more than the rotation performed by the sensed touch information.

6. The input apparatus according to claim 5, wherein the sensed information comprises a rotation angle of the input apparatus.

7. The input apparatus according to claim 6, wherein the sensed information further comprises a rotation direction of the input apparatus or a drag direction by the touch.

8. The input apparatus according to claim 6, wherein the controller generates and transmits a command through the communication unit to suspend a rotation of the channel number list in response to the motion sensor sensing that the rotation angle of the input apparatus returns to an initial value.

9. A display apparatus comprising:
a display unit;
an image processor which processes a predetermined image to display the image on the display unit;
a communication unit which communicates with an input apparatus which comprises a touch sensor to sense a touch and a motion sensor to sense a motion; and
a controller which scrolls the image corresponding to motion information of the input apparatus by the motion sensor transmitted to the communication unit, and moves an object within the scrolled image corresponding to touch information by the touch sensor transmitted to the communication unit.

10. The display apparatus according to claim 9, wherein the image comprises a plurality of selectable items, and the object comprises one of a highlight indicator with respect to one of the plurality of items and a cursor indicating one of the plurality of items.

11. The display apparatus according to claim 9, wherein the touch information of the touch sensor corresponds to a drag on the touch sensor.

12. The display apparatus according to claim 9, wherein the controller rotates a channel number list for selecting a channel, corresponding to transmitted information regarding at least one of a sensing of the touch by the touch sensor and a sensing of the motion by the motion sensor in response to such information being transmitted by the input apparatus while an image of the channel number list is displayed in a circular shape on the display unit, and the rotation by the sensed motion information rotates the channel number list more than a rotation by the sensed touch information.

13. The display apparatus according to claim 12, wherein the transmitted information comprises a rotation angle of the input apparatus.

14. The display apparatus according to claim 13, wherein the transmitted information further comprises a rotation direction of the input apparatus or a drag direction by the touch.

15. The display apparatus according to claim 13, wherein the controller suspends the rotation of the channel number list in response to the motion sensor sensing that the rotation angle of the input apparatus returns to an initial value.
